# EUROPÄISCHE PATENTSCHRIFT

(11) **EP 3 445 734 B1**
(45) Veröffentlichungstag und Bekanntmachung des Hinweises auf die Patenterteilung: **02.10.2019**
(21) Anmeldenummer: 16717667.6
(22) Anmeldetag: 22.04.2016
(51) Int. Cl.: C04B 26/04, C04B 14/06, E01B 3/44, B29C 43/02

(54) **VERFAHREN ZUM HERSTELLEN EINER SCHWELLE FÜR DEN EINSATZ IM GLEISOBERBAU**
METHOD FOR PRODUCING A TIE FOR USE IN THE TRACK SUPERSTRUCTURE
PROCÉDÉ POUR FABRIQUER UNE TRAVERSE À UTILISER DANS UNE SUPERSTRUCTURE DE VOIE FERRÉE

(43) Veröffentlichungstag der Anmeldung: 27.02.2019
(73) Patentinhaber: Vossloh-Werke GmbH, 58791 Werdohl (DE)
(72) Erfinder: BÖSTERLING, Winfried, 58809 Neuenrade (DE); BEDNARCZYK, Adrian, 58509 Lüdenscheid (DE); SCHRÖDER, Nicolas, 44225 Dortmund (DE)
(74) Vertreter: Cohausz & Florack
(86) Internationale Anmeldenummer: PCT/EP2016/059064
(87) Internationale Veröffentlichungsnummer: WO 2017/182096

(56) Entgegenhaltungen:
- WO-A1-94/27800
- DE-U1-202011 050 077
- GB-A- 2 291 419
- US-A- 5 055 350

## Beschreibung

Die Erfindung betrifft ein Verfahren zum Herstellen einer zum Einsatz im Gleisoberbau vorgesehenen Schwelle, die aus einem Kunststoff-Sand-Gemisch geformt ist.

Wenn in diesem Text auf Normen oder vergleichbare Vorschriften Bezug genommen wird, ist damit immer die zum Zeitpunkt der Einreichung der vorliegenden Anmeldung geltende Fassung gemeint, sofern nicht ausdrücklich etwas anderes angegeben ist.

Das von Schienenfahrzeugen befahrene Gleis ist Teil des Gleisoberbaus und umfasst Schienen, auf den die Räder des Schienenfahrzeugs abrollen, Schwellen, die die Schienen tragen und in ihrer lagerichtigen Position halten, und Schienenbefestigungsmittel, mit denen die Schienen auf den Schwellen befestigt sind. Die Schwellen sind dabei üblicherweise auf einem Schotterbett ("Schotterbettoberbau") oder auf einem festen Untergrund ("feste Fahrbahn") abgestützt, der beispielsweise durch Betonplatten oder desgleichen gebildet ist.

Im Gebrauch sind die Schwellen hohen Belastungen ausgesetzt. Sie müssen nicht nur das Gewicht der Schienen und des Schienenfahrzeugs aufnehmen, sondern beim Überfahren durch ein Schienenfahrzeug auch hohe dynamische Belastungen aufnehmen. Gleichzeitig müssen sie raue und stark wechselnde Umweltbedingungen ertragen, die beispielsweise durch große Temperatur- oder Feuchtigkeitsschwankungen gekennzeichnet sind.

Konventionelle Schwellen bestehen aus Holz, Stahl oder Beton. Holzschwellen sind vergleichsweise teuer, verhalten sich im Einsatz jedoch in einem gewissen Maße elastisch. Dies hat den Vorteil, dass sich mit ihnen ohne größeren Aufwand Schienenbefestigungen bilden lassen, die in Schwerkraftrichtung eine gewisse, für die Lebensdauer der Schiene günstige Nachgiebigkeit zeigen. Dem steht gegenüber, dass aufwändige und unter Umweltgesichtspunkten zum Teil bedenkliche Maßnahmen erforderlich sind, um Holzschwellen gegen Verrottung zu schützen. Wegen der Verrottungsgefahr müssen Holzschwellen zudem in vergleichbar kurzen Abständen inspiziert und gepflegt werden.

Betonschwellen sind dagegen verschleißfester und lassen sich kostengünstiger herstellen. Jedoch weisen sie ein hohes Gewicht auf und sind nicht elastisch. Die mangelnde Elastizität macht zusätzliche Maßnahmen erforderlich, um die im jeweiligen Schienenbefestigungspunkt geforderte Nachgiebigkeit zu bewerkstelligen. Auch zeigen sich Betonschwellen bei extremen Witterungswechseln anfällig für eine schnell fortschreitende Alterung.

Als Alternative zu den konventionellen Holz- oder Betonschwellen sind Schwellen vorgeschlagen worden, die aus einem Kunststoff-Sand-Gemisch bestehen (DE 20 2011 050 077 U1). Der Sand und die Polymere des Kunststoffs sollen dabei derart miteinander verbunden sein, dass einerseits eine ausreichende Formsteifigkeit, anderseits auch eine dem Verhalten der Holzschwelle vergleichbare Elastizität erreicht wird. US5,055,350 offenbart Kunststoffschwellen auf Basis von Sand und recyceltem Kunststoff.

Ein Verfahren, dass die Herstellung solcher Schwellen ermöglichen soll, soll dabei aus der EP 1 299 321 B1 bekannt sein. Bei diesem Verfahren wird der Sand auf 300 - 800 °C erhitzt und dann mit einem Granulat des jeweiligen Kunststoffs gemischt. Das Gemisch wird in eine die Schwelle abbildende Form gegeben und bei einem Druck von 1 - 40 kPa auf 60 - 100 °C abgekühlt. Die Korngröße des Sands soll bei 0,5 - 0,9 mm liegen.

Vor dem Hintergrund des Standes der Technik hat sich die Aufgabe ergeben, ein Verfahren zu nennen, mit dem sich betriebssicher und kostengünstig Schwellen herstellen lassen, die optimierte Gebrauchseigenschaften besitzen.

Die Erfindung hat diese Aufgabe durch das in Anspruch 1 angegebene Verfahren gelöst.

Vorteilhafte Ausgestaltungen der Erfindung sind in den abhängigen Ansprüchen angegeben und werden nachfolgend wie der allgemeine Erfindungsgedanke im Einzelnen erläutert.

Das erfindungsgemäße Verfahren zum Herstellen einer Schwelle zum Einsatz im Gleisoberbau umfasst somit folgende Arbeitsschritte:
a) Bereitstellen einer Mischung, die zu 10 - 60 Masse-% aus einem Granulat eines durch Wärmezufuhr verformbaren Kunststoffs und als Rest aus einem Sand mit einer Schüttdichte von 1,4 - 2,0 g/cm³ besteht;
b) Erwärmen der Mischung auf eine Temperatur von 150 - 180 °C;
c) Einfüllen der Mischung in eine die Schwelle abbildende Pressform;
d) Verpressen der Mischung in der Form mit einem in der Mischung gemessenen Pressdruck von 1 - 5 MPa über eine Pressdauer von bis zu 60 min;
e) Entformen der Schwelle aus der Form.

Die Erfindung geht von der Erkenntnis aus, dass es für eine zuverlässige, betriebssichere Herstellung erforderlich ist, einen exakt begrenzten Temperaturbereich und einen ebenso exakt bestimmten Bereich für den Pressdruck auszuwählen, unter dem die in die jeweilige Form gefüllte Sand-Kunststoff-Mischung gehalten wird, bis sich die für die Formhaltigkeit der Schwelle erforderliche Anbindung von Sand und Kunststoff eingestellt hat.

Der Temperaturbereich, innerhalb der die Temperatur des Sand-Kunststoff-Gemischs beim Verpressen in der jeweiligen Form liegt, beträgt erfindungsgemäß 150 - 200 °C. Diese Temperatur kann die Sand-Kunststoff-Mischungs erhalten, indem zunächst der Sand und das jeweilige Kunststoffgranulat gemischt werden und das erhaltene Gemisch dann auf die Verpresstemperatur erwärmt wird. Bei praktischen Versuchen hat sich herausgestellt, dass sich mit Verpresstemperaturen von mindestens 160 °C zuverlässig Schwellen herstellen lassen, die hinsichtlich ihrer Formtreue, Oberflächenbeschaffenheit und mechanischen Eigenschaften auch höchste Anforderungen erfüllen. Unter dem Gesichtspunkt der Optimierung des Energieeinsatzes kann es zweckmäßig sein, die Verpresstemperatur auf höchstens 180 °C zu begrenzen.

Alternativ zu einer gemeinsamen Erwärmung von Kunststoff und Sand kann es zweckmäßig sein, nur den Sand vorzuerwärmen und ihn dann erst mit dem noch nicht erwärmten Kunststoffgranulat zu vermischen. In Folge des Kontakts mit dem heißen Sand wird der bis dahin kühlere Kunststoff schnell auf die erfindungsgemäß geforderte Verpresstemperatur erwärmt. Dies hat nicht nur Vorteile für die effektive Nutzung der Wärmeenergie, sondern wirkt sich auch positiv auf den Vorgang der Anbindung von Sand und Kunststoff aus. Um diese Vorteile zu nutzen, ist der Sand unter Berücksichtigung der in der herzustellenden Schwelle vorgesehenen Massenverhältnisse von Sand und Kunststoff sowie des Erwärmungsverhaltens des Kunststoffs so über die Verpresstemperatur hinaus zu erwärmen, dass die Temperatur des aus dem heißen Sand und dem kühlen Kunststoff gebildeten Gemischs nach der Vermischung im erfindungsgemäß vorgesehenen Temperaturbereich liegt. Hierzu hat es sich in praktischen Versuchen bewährt, wenn der Sand auf eine Temperatur von 180 - 250 °C, insbesondere mindestens 190 °C oder höchstens 230 °C, erwärmt und dann mit dem Kunststoff gemischt wird.

Das erfindungsgemäß verarbeitete Sand-Kunststoff-Gemisch muss die erfindungsgemäß vorgegebene Presstemperatur in der Pressform aufweisen. Um dies sicherzustellen, kann es bei Verfahrensvarianten, bei denen das Sand-Kunststoff-Gemisch vor dem Einfüllen in die Form erhitzt und im heißen Zustand in das formgebende Werkzeug gefüllt wird, erforderlich sein, die Temperatur des Sand-Kunststoff-Gemischs unter Berücksichtigung des Temperaturverlustes, der durch den Kontakt der Mischung mit der Form eintreten kann, so einzustellen, dass die Temperatur des Gemischs nach dem Einfüllen in die Form immer noch im für die Verpesstemperatur vorgegebenen Temperaturbereich liegt. Um einen übermäßigen Temperaturverlust zu vermeiden, kann es zweckmäßig sein, die Pressform für das Einfüllen auf durchschnittlich mindestens 100 °C, insbesondere mindestens 110 °C zu bringen, wobei sich Temperaturen von bis zu 180 °C, insbesondere bis zu 140 °C, hier in der Praxis als ausreichend und unter dem Gesichtspunkt der optimalen Energienutzung als günstig erwiesen haben, um eine ausreichende Temperierung des jeweils in die Pressform gefüllten Sand-Kunststoff-Gemischs zu gewährleisten. "Durchschnittlich" bedeutet hier im Zusammenhang mit der Temperatur der Pressform, dass der Durchschnitt der für alle Bereiche der Pressform erfassten Temperatur den erfindngsgemäßen Vorgaben entspricht. Es können somit lokal Abweichungen von diesen Vorgaben, also höhere oder niedrigere Temperaturen, vorliegen. Entscheidend ist, dass der Durchschnittswert erreicht wird, wobei die lokal auftretenden Abweichungen von dem Durchschnittswert optimalerweise nicht mehr als 10 %, insbesondere nicht mehr als 5 %, betragen.

Nach dem Verpressen kann die Schwelle entformt werden. Dabei versteht es sich von selbst, dass die Schwelle erforderlichenfalls in der Form bis zu einer bestimmten Entnahmetemperatur abgekühlt wird, um das Entformen zu erleichtern. So hat es sich als zweckmäßig erwiesen, wenn die Entnahmetemperatur der Schwelle 40 - 100 °C, insbesondere 50 - 70 °C beträgt.

Wesentlich für den Erfolg der Erfindung ist auch, dass der mit dem Kunststoffgranulat vermischte Sand eine Schüttdichte von 1,4 - 2,0 g/cm³ besitzt, wobei sich Sande mit einer Schüttdichte von mindestens 1,6 g/cm³ als besonders günstig herausgestellt haben. Bei Sanden mit innerhalb der erfindungsgemäßen Vorgaben gewählter Schüttdichte ist eine gute Durchmischung mit dem Kunststoffgranulat und demzufolge eine gute Anbindung der Sandkörner an die sie in der fertigen Schwelle umgebende Kunststoffmatrix gewährleistet, die sich aus den im Zuge der Erwärmung und des Pressvorgangs aufschmelzenden und verdichteten Kunststoffgranulat-Körnern bildet. Als besonders günstig haben sich dabei Schüttdichten von bis zu 1,9 g/cm³, insbesondere mindestens 1,7 g/cm³, erwiesen.

Praktische Versuche haben ergeben, dass Sand, der aus Körnern mit einer mittleren Korngröße von 0,6 - 6 mm, insbesondere bis 5 mm, besteht, sich besonders gut für die erfindungsgemäßen Zwecke eignet. So ergibt sich bei einer solchen Körnung eine besonders gute Einbettung der Sandkörner in die Kunststoffmatrix der fertig hergestellten Schwelle. Hierdurch wird nicht nur die Stabilität der Schwelle optimiert, sondern auch ihr Dämpfungsverhalten und ihre Elastizität für den Einsatz als Schwelle in einem Gleis für Schienenfahrzeuge optimal eingestellt. Besonders günstig erweisen sich dabei Sande, deren Körner einen mittleren Durchmesser von mindestens 0,8 mm, insbesondere 1,0 mm oder mehr als 1,0 mm, aufweisen, wobei sich Sande mit mittleren Korndurchmessern von höchstens 1,6 mm in Versuchen besonders bewährt haben.

Als Sand für die erfindungsgemäßen Zwecke kommen sämtliche Sande in Frage, deren Schüttdichte als Mindestanforderung den erfindungsgemäßen Vorgaben entspricht.

Als besonders vorteilhaft haben sich dabei gebrochene Sande erwiesen. Hierbei handelt es sich in der Regel um künstlich erzeugte Sande, wie sie beispielsweise beim Recyclen von auf Sandbasis hergestellten Produkten, wie erfindungsgemäßen Schwellen, entstehen. Gebrochene Sande zeichnen sich dadurch aus, dass ihre Körner scharfkantige Vorsprünge an ihrem Umfang aufweisen, über die sie sich mit den an ihnen angrenzenden Körnern verhaken und so zu einer besonders hohen Festigkeit und Durchbruchsicherheit der erfindungsgemäß erzeugten Schwelle beitragen.

Die Härte der Körner des erfindungsgemäß verwendeten Sands weist vorteilhafterweise eine nach Mohs (s. beispielsweise Detlef Gysau, "Füllstoffe", 3. Auflage, Hannover: Vincentz Network, 2014, ISBN: 9783866308398) bestimmte Härte von 5 - 8 auf, wobei sich Sande mit Körnern, die eine nach Mohs bestimmte Härte von mindestens 6, insbesondere mindestens 7, aufweisen, als besonders geeignet erwiesen haben.

Der Gehalt der für das erfindungsgemäße Verfahren im Arbeitsschritt a) bereitgestellten Mischung an Kunststoffgranulat beträgt 10-60 Masse-%, wobei sich Gehalte von 20 - 40 Masse-% als besonders vorteilhaft erwiesen haben.

Als Kunststoff können für die erfindungsgemäße Herstellung einer Schwelle grundsätzlich alle Kunststoffe verwendet werden, die sich mit einem nach den erfindungsgemäßen Vorgaben beschaffenen Sand mischen lassen und unter Wärme- und Druckzufuhr so verdichtet werden können, dass sich eine ausreichende Anbindung zwischen dem Kunststoff und den in ihm eingebetteten Körnern des Sands ergibt. Insbesondere eignen sich hierfür die üblicherweise als "thermoplastisch" bezeichneten Kunststoffe.

Besonders geeignet sind hier Kunststoffgranulate, die aus einem Polypropylen-Granulat (PP-Granulat) oder einem Polyethylen-Granulat (PE-Granulat), insbesondere einem Granulat aus einem hochdichten Polyethylen (HDPE-Granulat), bestehen. Diese Granulate können nur aus einem Kunststoffgranulat alleine oder als Mischung unterschiedlicher Kunststoffgranulate, zum Einsatz kommen. Im Fall, dass eine solche Kunststoffmischung verwendet werden soll, hat es sich als günstig erwiesen, wenn das Kunststoffgranulat zu 40 - 60 Masse-% aus PP-Granulat und als Rest aus PE- bzw. HDPE-Granulat besteht.

Ebenfalls als günstig im Hinblick auf eine gute Formfüllung beim Verpressen des erfindungsgemäß in die formgebende Form gefüllten Sand-Kunststoff-Gemischs hat es sich als günstig erwiesen, wenn der gemäß DIN EN ISO 1133 bei einer Prüftemperatur von 190 °C und einer Lastmasse von 2,16 kg bestimmte Melt Flow MFI/190/2,16 (siehe auch: A.B. Mathur, I.S. Bhardway, "Testing and Evaluation of Plastics", Allied Publishers PVT. Limited, 2003, ISBN 81-7764-436-X) des Kunststoffs oder der Kunststoffe, aus dem das Kunststoffgranulat besteht, jeweils kleiner 10, insbesondere kleiner 9, ist. Dabei kann bei Verwendung von PP-Granulat dessen Melt Flow Index MFI/190/2,16 weniger als 10 und bei Verwendung von PE-Granulat, insbesondere HDPE-Granulat, dessen Melt Flow Index weniger als 8, insbesondere weniger als 5, betragen.

Eine gute Durchmischung des Kunststoffmaterials mit dem Sand des erfindungsgemäß verarbeiteten Sand-Kunststoff-Gemischs kann dadurch zusätzlich unterstützt werden, dass die Körnung des Granulats an die Körnung des Sands angepasst ist. Hierzu hat es sich bewährt, wenn das Kunststoffgranulat pulver- oder puderförmig vorliegt.

Erfindungsgemäß erzeugte Schwellen weisen eine hohe Sicherheit gegen Durchbrechen auf.

Gemäß DIN EN 13146-10 durchgeführte Tests haben für die erfindungsgemäß hergestellte Schwellen regelmäßig hohe, strengsten Anforderungen genügende Ausziehwiderstände ergeben, so dass die diesbezüglich in der Praxis gestellten Anforderungen stets sicher erfüllt werden.

Darüber hinaus erweisen sich erfindungsgemäße Schwellen im besonderen Maße für den Einsatz selbstschneidender Schienenbefestigungsschrauben als geeignet, die zur Befestigung der jeweils auf der Schwelle abzustützenden Schiene in eine, insbesondere als Bohrung, in die Schwelle eingebrachte Zylinderöffnung geschraubt werden und dabei in das die Öffnung umgebende Material schneiden. Hier zeigt sich, dass erfindungsgemäße Schwellen hohe Anzugsmomente von mindestens 60 kN aufnehmen können, ohne dass es zum Ausbrechen von Schwellenmaterial kommt. Dies erlaubt es, in Kombination mit erfindungsgemäßen Schwellen einfach aufgebaute und preiswerte Systeme zur Befestigung der jeweils zu befestigenden Schiene zu verwenden, bei denen zur Verankerung auf der Schwelle nur eine minimale Zahl von Schrauben benötigt wird.

Nachfolgend wird die Erfindung anhand eines Ausführungsbeispiels näher erläutert.

Zur Herstellung einer in konventioneller Weise quaderförmig langstreckt geformten Schwelle für einen Schotterbettoberbau ist ein gebrochener Quarzsand bereitgestellt worden. Die Schüttdichte des Sandes betrug ca. 1,9 g/cm³ bei einer nach Mohs bestimmten Härte von 7 und einer mittleren Korngröße der Sandkörner von 1,0 - 1,6 mm.

Genauso wurde ein Kunststoff-Granulat bereitgestellt, das aus einer Mischung von PP-Kunststoffkörnern und HDPE-Kunststoffkörnern bestand. Die PP-Kunststoffkörner und die HDPE-Kunststoffkörner waren dabei im Verhältnis 1:1 in der Mischung enthalten. Der bei 190°C und einer Last von 2,16 kg ermittelte Melt Flow Index des PP-Kunststoff-Granulats betrug 8, wogegen er bei dem HDPE-Kunststoff-Granulat bei 3 lag. Das Kunststoff-Granulat lag ebenfalls als Granulat vor.

Vor dem Mischen mit dem Kunststoff-Granulat ist der Sand mit Hilfe einer in ihn eingetauchten, mittels eines erwärmten Öls beheizten Heizpatrone auf 220 °C erwärmt worden. Die Temperatur des Kunststoff-Granulats entsprach dagegen der Raumtemperatur.

Der heiße Sand ist dann mit dem Kunststoff-Granulat vermischt worden. Die Dosierung von Sand und Kunststoff-Granulat erfolgte dabei derart, dass das erhaltene Sand-Kunststoff-Gemisch zu 30 Masse-% aus Kunststoff-Granulat (je 15 Masse % PP- und HDPE-Kunststoff-Granulat) und als Rest aus Sand bestand. Im Zuge der Mischung ist das Kunststoff-Granulat erhitzt und der heiße Sand in entsprechender Weise abgekühlt worden, so dass das erhaltene Sand-Kunststoff-Gemisch eine Presstemperatur von 170 °C aufwies. Bei dieser Temperatur war das Kunststoff-Granulat bereits vollständig aufgeschmolzen.

Das so temperierte Sand-Kunststoff-Gemisch ist in eine Form eines Presswerkzeugs gefüllt worden, deren Temperatur bei mindestens 120 °C gehalten worden ist.

Dann ist das Sand-Kunststoff-Gemisch in der Form über eine Dauer von beispielsweise 30 Minuten unter einem Druck von 3,6 MPa gehalten worden. Auf diese Weise wurde die Form gleichmäßig mit dem Sand-Kunststoff-Gemisch gefüllt, so dass die durch die Form vorgegebenen Details der Schwelle einwandfrei abgebildet wurden und eine intensive Anbindung des Sands an den ihn umgebenden Kunststoff eintrat.

Nach Ende der Presszeit ist die Form geöffnet und die erhaltene Schwelle auf eine Entformtemperatur von 60 °C abgekühlt worden, bei der schließlich die Schwelle aus der Form entformt wurde.

Die erhaltene Schwelle wies eine so hohe Bruchsicherheit auf, dass sie die im praktischen Einsatz auftretenden Belastungen dauerhaft sicher aufnehmen konnte.

Dabei erwiesen sich, dass die Ausziehwiderstände, d.h. die Kräfte, die notwendig sind, um die Verankerung einer Schienenbefestigung aus der Schwelle herauszuziehen, deutlich größer sind als der hierfür in der Praxis vorgeschriebene Mindestwert.

Ebenso wurden bei Versuchen mit konventionellen Schwellenschrauben Anzugsmomente erreicht, die deutlich oberhalb von 60 kN lagen, beispielsweise 70 kN und mehr.

## Patentansprüche

1. Verfahren zum Herstellen einer Schwelle zum Einsatz im Gleisoberbau, umfassend folgende Arbeitsschritte:
a) Bereitstellen einer Mischung, die zu 10 - 60 Masse-% aus einem Granulat eines durch Wärmezufuhr verformbaren Kunststoffs und als Rest aus einem Sand mit einer Schüttdichte von 1,4 - 2,0 g/cm³ besteht;
b) Erwärmen der Mischung auf eine Temperatur von 150 - 200 °C;
c) Einfüllen der Mischung in eine die Schwelle abbildende Pressform;
d) Verpressen der Mischung in der Form mit einem in der Mischung gemessenen Pressdruck von 1 - 5 MPa über eine Pressdauer von bis zu 60 min;
e) Entformen der Schwelle aus der Form.

2. Verfahren nach Anspruch 1, **dadurch gekennzeichnet, dass** die im Arbeitsschritt a) bereitgestellte Masse 20 - 40 Masse-% des Granulats eines Kunststoffs enthält.

3. Verfahren nach einem der voranstehenden Ansprüche, **dadurch gekennzeichnet, dass** die Schüttdichte des in Arbeitsschritt a) bereitgestellten Sandes mindestens 1,6 g/cm³ beträgt.

4. Verfahren nach einem der voranstehenden Ansprüche, **dadurch gekennzeichnet, dass** die Pressdauer mindestens 5 min beträgt.

5. Verfahren nach einem der voranstehenden Ansprüche, **dadurch gekennzeichnet, dass** die Temperatur, auf die die Mischung im Arbeitsschritt b) erwärmt wird, mindestens 160 °C beträgt.

6. Verfahren nach einem der voranstehenden Ansprüche, **dadurch gekennzeichnet, dass** das Kunststoffgranulat aus einem Polypropylen-Granulat (PP-Granulat) oder einem Polyethylen- Granulat (PE-Granulat) besteht.

7. Verfahren nach Anspruch 6,**dadurch gekennzeichnet, dass** das Kunststoffgranulat aus einem PP-Granulat und einem PE-Granulat gemischt ist.

8. Verfahren nach Anspruch 7, **dadurch gekennzeichnet, dass** das Kunststoffgranulat zu 40 - 60 Masse-% aus PP-Granulat und als Rest aus PE-Granulat besteht.

9. Verfahren nach einem der voranstehenden Ansprüche, **dadurch gekennzeichnet, dass** der Melt Flow Index MFI/190/2, 16 des Kunststoffs oder der Kunststoffe, aus dem das Kunststoffgranulat besteht, jeweils kleiner 10 ist.

10. Verfahren nach einem der voranstehenden Ansprüche, **dadurch gekennzeichnet, dass** der Sand, bevor er mit dem Kunststoff-Granulat gemischt wird, auf eine Temperatur von 150 - 230 °C erwärmt wird.

11. Verfahren nach einem der voranstehenden Ansprüche, **dadurch gekennzeichnet, dass** die Temperatur der Pressform beim Befüllen mit der Kunststoffgranulat-Sand-Mischung durchschnittlich 100 - 140 °C beträgt.

12. Verfahren nach einem der voranstehenden Ansprüche, **dadurch gekennzeichnet, dass** der Sand aus Körnern mit einer mittleren Korngröße von 0,6 - 6 mm besteht.

13. Verfahren nach Anspruch 12, **dadurch gekennzeichnet, dass** die Körner des Sands eine Korngröße von 0,8 - 1,6 mm aufweisen.

14. Verfahren nach einem der voranstehenden Ansprüche, **dadurch gekennzeichnet, dass** der Sand eine nach Mohs bestimmte Härte von 5 - 8 besitzt.

15. Verfahren nach einem der voranstehenden Ansprüche, **dadurch gekennzeichnet, dass** der Sand gebrochener Sand ist.

## Claims

1. Method for producing a sleeper for use in the railway track superstructure, comprising the following production steps:
a) providing a mixture 10 - 60 % mass of which consists of a granulate of a plastic, which is deformable by applying heat, and the remainder of which consists of a sand having a bulk density of 1.4 - 2.0 g/cm³;
b) heating the mixture to a temperature of 150 - 200 °C;
c) pouring the mixture into a press mould reproducing the sleeper;
d) pressing the mixture in the mould at a pressing pressure measured in the mixture of 1 - 5 MPa over a pressing period of up to 60 minutes;
e) removing the sleeper from the mould.

2. Method according to Claim 1, **characterised in that** the mass provided in production step a) contains 20 - 40 % mass of the granulate of a plastic.

3. Method according to any one of the preceding claims, **characterised in that** the bulk density of the sand provided in production step a) amounts to at least 1.6 g/cm³.

4. Method according to any one of the preceding claims, **characterised in that** the pressing period is at least 5 minutes.

5. Method according to any one of the preceding claims, **characterised in that** the temperature which the mixture is heated to in production step b) is at least 160 °C.

6. Method according to any one of the preceding claims, **characterised in that** the plastic granulate consists of a polypropylene granulate (PP granulate) or a polyethylene granulate ((PE granulate).

7. Method according to Claim 6, **characterised in that** the plastic granulate is mixed from a PP granulate and a PE granulate.

8. Method according to Claim 7, **characterised in that** 40 - 60 % mass of the plastic granulate consists of PP granulate and the remainder consists of PE granulate.

9. Method according to any one of the preceding claims, **characterised in that** the melt flow index MFI/190/2, 16 of the plastic or of the plastics of which the plastic granulate consists is less than 10 in each case.

10. Method according to any one of the preceding claims, **characterised in that** the sand is heated to a temperature of 150 - 230 °C before it is mixed with the plastic granulate.

11. Method according to any one of the preceding claims, **characterised in that** the temperature of the press mould is on average 100 - 140 °C when being filled with the plastic granulate-sand mixture.

12. Method according to any one of the preceding claims, **characterised in that** the sand consists of grains having an average grain size of 0.6 - 6 mm.

13. Method according to Claim 12, **characterised in that** the grains of the sand have a grain size of 0.8 - 1.6 mm.

14. Method according to any one of the preceding claims, **characterised in that** the sand has a hardness of 5 - 8 determined according to Mohs.

15. Method according to any one of the preceding claims, **characterised in that** the sand is crushed sand.

## Revendications

1. Procédé pour fabriquer une traverse destinée à être utilisée dans une superstructure de voie ferrée, comportant les étapes de travail suivantes :
a) mise à disposition d'un mélange étant constitué à 10 à 60 % en masse d'un granulat d'une matière plastique déformable par apport de chaleur, et, en tant qué reste, d'un sable ayant une densité volumique apparente de 1,4 à 2,0 g/cm³ ;
b) chauffage du mélange à une température de 150 à 200 °C ;
c) Versement du mélange dans un moule à compression en forme de traverse ;
d) compression du mélange dans le moule avec une pression mesurée dans le mélange de 1 à 5 MPa pendant une durée de compression allant jusqu'à 60 min ;
e) démoulage de la traverse.

2. Procédé selon la revendication 1, **caractérisé en ce que** la masse mise à disposition dans l'étape de travail a) contient 20 à 40 % en masse du granulat d'une matière plastique.

3. Procédé selon l'une des revendications précédentes, **caractérisé en ce que** la densité volumique apparente du sable mis à disposition dans l'étape de travail a) est d'au moins 1 ,6 g/cm³.

4. Procédé selon l'une des revendications précédentes, **caractérisé en ce que** la durée de compression est d'au moins 5 min.

5. Procédé selon l'une des revendications précédentes, **caractérisé en ce que** la température à laquelle le mélange est chauffé dans l'étape de travail b) est au moins de 160 °C.

6. Procédé selon l'une des revendications précédentes, **caractérisé en ce que** le granulat de matière plastique se compose d'un granulat à base de polypropylène (granulat PP) ou d'un granulat à base de polyéthylène (granulat PE).

7. Procédé selon la revendication 6, **caractérisé en ce que** le granulat de matière plastique est mélangé à partir d'un granulat PP et un granulat PE.

8. Procédé selon la revendication 7, **caractérisé en ce que** le granulat de matière plastique se compose de 40 à 60 % en masse d'un granulat PP et le reste étant un granulat PE.

9. Procédé selon l'une des revendications précédentes, caractérisé en ce l'indice de fluidité à chaud MFI/190/2, 16 (Melt Flow Index MFI/190/2,16) de la matière plastique ou des matières plastiques, dont le granulat de matière plastique se compose, est respectivement inférieur à 10.

10. Procédé selon l'une des revendications précédentes, **caractérisé en ce que** le sable, avant d'être mélangé avec le granulat de matière plastique, est chauffé à une température de 150 à 230 °C.

11. Procédé selon l'une des revendications précédentes, **caractérisé en ce que** la température du moule à compression, lors du remplissage avec le mélange sable-granulat de matière plastique, est en moyenne de 100 à 140 °C.

12. Procédé selon l'une des revendications précédentes, **caractérisé en ce que** le sable se compose de grains ayant une taille de grain moyenne de 0,6 à 6 mm.

13. Procédé selon la revendication 12, **caractérisé en ce que** les grains de sable présentent une taille de grain de 0,8 à 1,6 mm.

14. Procédé selon l'une des revendications précédentes, **caractérisé en ce que** le sable possède une dureté Mohs de 5 à 8.

15. Procédé selon l'une des revendications précédentes, **caractérisé en ce que** le sable est du sable cassé.
